# EUROPEAN PATENT APPLICATION

(11) **EP 4 525 003 A1**
(43) Date of publication of application: **19.03.2025**
(21) Application number: 24306489.6
(22) Date of filing: 11.09.2024
(51) Int. Cl.: H01B 17/28, H01B 17/58, H02B 1/04

(54) **CONNECTION SLEEVE AND SWITCH CABINET**

(30) Priority: 15.09.2023 CN 202322529313 U
(71) Applicant: SCHNEIDER ELECTRIC INDUSTRIES SAS, 92500 Rueil-Malmaison (FR)
(72) Inventor: WANG, Fugang, Shanghai, 201203 (CN); DU, Shiquan, Shanghai, 201203 (CN)
(74) Representative: Manitz Finsterwald Patent- und Rechtsanwaltspartnerschaft mbB

(57) **Abstract**

The present disclosure discloses a connection sleeve, which includes: a main body, at least partially formed in a column shape; a conductive rod, extending through the main body in an axial direction; a first electrical interface, located at one end of the conductive rod; a second electrical interface, located at other end of the conductive rod; a first shield piece and a second shield piece, which are independent of each other, are formed in ring shapes and are respectively arranged around a part of the conductive rod in the main body and spaced apart from the conductive rod; a first output interface, connected to the first shield piece and configured to output a first voltage signal; and a second output interface, connected to the second shield piece and configured to output a second voltage signal independent of the first voltage signal. The connection sleeve according to the present disclosure can output two groups of independent different voltage signals through two independent shield pieces. The present disclosure also discloses a switch cabinet including the connecting sleeve.

## Description

### TECHNICAL FIELD

The present disclosure relates to a connection sleeve and a switch cabinet including the connection sleeve.

### BACKGROUND

The switch cabinet itself is a sealed container, which needs to input voltage and current signals to the upper end or lower end of the switch cabinet to connect a circuit inside the switch cabinet with a circuit outside the switch cabinet. The connection sleeve is the component that connects a bus inside the switch cabinet to a cable outside the switch cabinet. In addition to connecting the circuit inside the switch cabinet with the circuit outside the switch cabinet, the connection sleeve is also expected to output signals.

### SUMMARY

A first aspect of the present disclosure provides a connection sleeve, which includes: a main body, at least partially formed in a column shape; a conductive rod, extending through the main body in an axial direction; a first electrical interface, located at one end of the conductive rod; a second electrical interface, located at other end of the conductive rod; a first shield piece and a second shield piece, which are independent of each other, are formed in ring shapes and are respectively arranged around a part of the conductive rod in the main body and spaced apart from the conductive rod; a first output interface, connected to the first shield piece and configured to output a first voltage signal; and a second output interface, connected to the second shield piece and configured to output a second voltage signal independent of the first voltage signal.

According to the present disclosure, the connection sleeve can output two groups of independent different voltage signals through two independent shield pieces. It is flexible to set two independent shield pieces, and the capacitance parameters can be changed by adjusting the size of the shield pieces, so as to match different output requirements.

The connection sleeve according to the present disclosure can include one or more of the following features.

According to an embodiment, the first shield piece and the second shield piece are spaced apart from each other in a radial direction.

According to an embodiment, the first shield piece and the second shield piece are partially overlapped with each other in an axial direction.

According to an embodiment, the connection sleeve further includes an installation part formed in a polygonal shape and protruding around a part of the main body, wherein installation holes are formed in the installation part.

According to an embodiment, the first shield piece and/or the second shield comprise reinforcing protrusions protruding in a radial direction, and the reinforcing protrusions are arranged at parts of the first shield piece and/or the second shield that are away from the first output interface/the second output interface in the axial direction.

According to an embodiment, three first output interfaces which extend to connect the first shield piece to an outer surface of the main body and are spaced apart from each other by 90° are formed; and three second output interfaces which extend to connect the second shield piece to an outer surface of the installation part and are spaced apart from each other by 90° are formed.

According to an embodiment, the first electrical interface is configured to be connected to a cable and the second electrical interface is configured to be connected to a bus.

According to an embodiment, the first electrical interface is a B-type interface or a C-type interface.

According to an embodiment, the main body is made of epoxy resin, the conductive rod, the first shield piece and the second shield piece are embedded in the main body.

A second aspect of the present disclosure provides a switch cabinet, which includes: a cabinet wall; a bus located in the switch cabinet; and the abovementioned connection sleeve, the second electrical interface is configured to be connected to the bus, the first electrical interface is configured to be connected to a cable located outside the switch cabinet, and the first output interface and the second output interface are configured to be accessed from outside of the switch cabinet.

### BRIEF DESCRIPTION OF DRAWINGS

In order to explain the technical solution of the embodiment of the present disclosure more clearly, the attached drawings of the embodiment of the present disclosure will be briefly introduced below. The attached drawings are only used to show some embodiments of the present disclosure, and are not limited to all embodiments of the present disclosure.
Figs. 1 and 2 are perspective views of a connection sleeve according to the present disclosure from different angles.
Figs. 3 and 4 are cross-sectional views of a connection sleeve according to the present disclosure, wherein the first electrical interface in Fig. 3 is a B-type interface, and the first electrical interface in Fig. 4 is a C-type interface.
Fig. 5 is a sectional perspective view showing a plurality of first output interfaces of the connection sleeve according to the present disclosure.
Fig. 6 is a sectional perspective view showing a plurality of second output interfaces of the connection sleeve according to the present disclosure.

### List of reference numerals:

1-main body, 2-conductive rods, 3-first electrical interface, 4-second electrical interface, 5-first shield piece, 51-reinforcing protrusion, 6-second shield piece, 7-first output interface, 8-second output interface, 9-installation part, and 91-installation holes.

### DETAILED DESCRIPTION

In order to make the purpose, technical details and advantages of the technical solution of the present disclosure more clear, the technical solution of the embodiment of the present disclosure will be described clearly and completely with the attached drawings of the specific embodiment of the present disclosure. Like reference numerals in the drawings represent like parts. It should be noted that the described embodiments are a part of the embodiments of the present disclosure, not all the embodiments. Based on the described embodiments of the present disclosure, all other embodiments obtained by ordinary technicians in the field without creative labor belong to the protection scope of the present disclosure.

Unless otherwise defined, technical terms or scientific terms used here shall have their ordinary meanings as understood by people with ordinary skills in the field to which this present disclosure belongs. The "first", "second" and similar words used in the specification and claims of the present disclosure patent application do not indicate any order, quantity or importance, but are only used to distinguish different components. Similar words such as "including" or "containing" mean that the elements or objects appearing before the word cover the elements or objects listed after the word and their equivalents, without excluding other elements or objects. Similar words such as "connected" or "connected" are not limited to physical or mechanical connection, but can include electrical connection, whether direct or indirect. "Up", "Down", "Left" and "Right" are only used to indicate the relative positional relationship. When the absolute position of the described object changes, the relative positional relationship may also change accordingly.

Hereinafter, the present disclosure will be described in detail by describing example embodiments.

The switch cabinet according to the present disclosure comprises a cabinet wall; a bus located in the switch cabinet; and a connection sleeve according to the present disclosure, so as to connect the bus in the switch cabinet to a cable outside the switch cabinet, thereby connecting a circuit inside the switch cabinet with a circuit outside the switch cabinet.

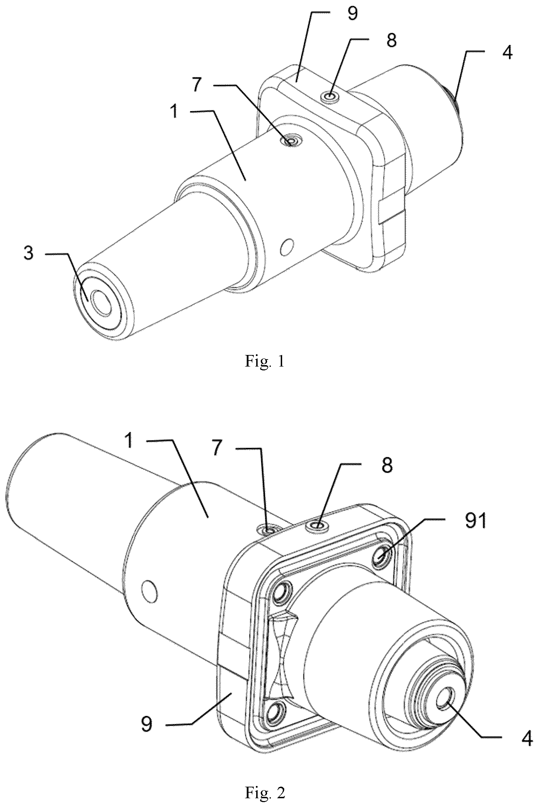

The connection sleeve according to the present disclosure can include a main body 1 at least partially formed in a column shape. The main body 1 is made of epoxy resin, for example. In the embodiment of Figs. 1 and 2, the main body 1 includes a portion formed in a cylindrical shape and a portion formed in a frustum shape.

The connection sleeve according to the present disclosure may further include an installation part 9 formed in a polygon (square in the embodiment of Figs. 1 and 2) and protruding around a part of the main body 1, and installation holes 91 are formed in the installation part 9, so that the connection sleeve can be fixed to the cabinet wall of the switch cabinet by screws.

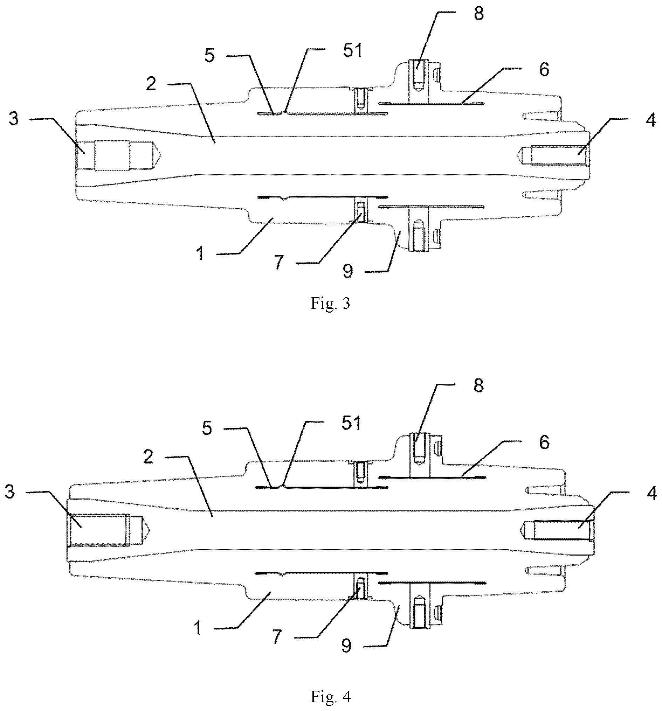

The connection sleeve according to the present disclosure may further include a conductive rod 2 extending through the main body 1 in an axial direction, a first electrical interface 3 located at one end of the conductive rod 2, and a second electrical interface 4 located at the other end of the conductive rod 2, as shown in Figs. 3 and 4. The first electrical interface 3 is configured to be connected to a cable outside the switch cabinet, and the second electrical interface 4 is configured to be connected to a bus inside the switch cabinet. In order to adapt to different cables, the first electrical interface 3 can be a B-type interface (as shown in Fig. 3) or a C-type interface (as shown in Fig. 4).

It is particularly advantageous that the connection sleeve according to the present disclosure further comprises a first shield piece 5 and a second shield piece 6 which are independent from each other. As shown in Figs. 3 and 4, the first shield piece 5 and the second shield piece 6 are formed in ring shapes, which are respectively arranged around a part of the conductive rod 2 in the main body 1 and are spaced apart from the conductive rod 2 to shield the high-voltage charged body so as to ensure the insulation level. Moreover, a capacitor is formed between the shield piece and the high-voltage charged body during operation, and the existence of the capacitor is equivalent to forming a battery, which can output electrical signals to the VPIS (High-voltage presence indicating system) and the client control unit. Preferably, the first shield piece 5 and the second shield piece 6 are spaced apart from each other in a radial direction, which is beneficial to form different voltage signals due to the different distances between the two shield pieces and the conductive rod 2. Preferably, the first shield piece 5 and the second shield piece 6 are partially overlapped in the axial direction, so that the axial distance required for arranging the two shield pieces can be reduced, which is beneficial to reducing the size of the connection sleeve. The first shield piece 5 and the second shield piece 6 are made of stainless steel mesh or brass, for example. Preferably, the first shield piece 5 and/or the second shield piece 6 may include reinforcing protrusions 51 protruding in the radial direction, for example, the reinforcing protrusion 51 protrudes outward from the entire circumference of the first shield piece 5 and/or the second shield piece 6. The reinforcing protrusion 51 may be provided at a part of the first shield piece 5 and/or the second shield piece 6 away from the first output interface 7/the second output interface 8 to ensure the roundness of the distal ends of the shield pieces. In the embodiment of Figs. 3 and 4, the first shield piece 5 includes a reinforcing protrusion 51, which is disposed at a part away from the first output interface 7.

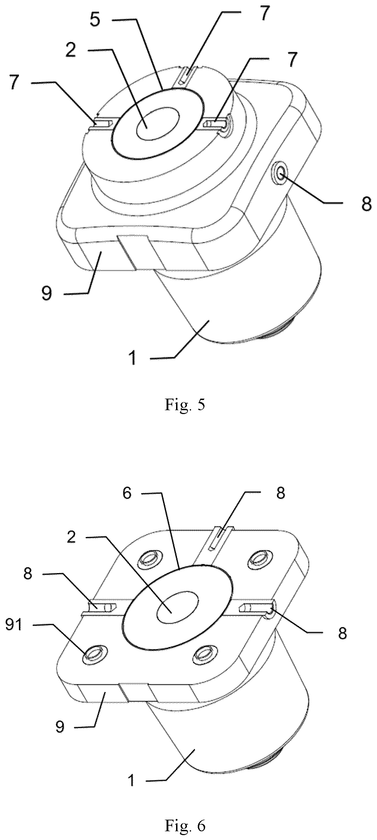

Furthermore, the connection sleeve according to the present disclosure may further include a first output interface 7 connected to the first shield piece 5 and configured to output a first voltage signal, and a second output interface 8 connected to the second shield piece 6 and configured to output a second voltage signal independent of the first voltage signal. Then, the electrical signal formed by the first shield piece 5 can be output via the first output interface 7, and the electrical signal formed by the second shield piece 6 independent of the first shield piece 5 can be output via the second output interface 8. In the embodiment of Figs. 5 and 6, three first output interfaces 7 which extend to connect the first shield piece 5 to an outer surface of the main body 1 and are spaced apart with each other by 90° are formed; three second output interfaces 8 which extend to connect the second shield piece 6 to the outer surface of the installation part 9 and are spaced apart with each other by 90° are formed. However, it should be noted that the present disclosure is not limited thereto. For example, the second output interface 8 can also connect the outer surface of the main body 1 from the second shield piece 6.

According to the connection sleeve of the present disclosure, the conductive rod 2, the first shield piece 5 and the second shield piece 6 can be embedded in the main body 1 made of epoxy resin, so that the connection sleeve can be simply manufactured.

For example, the two shield pieces of the connection sleeve according to the present disclosure respectively output electrical signals to the VPIS and the client remote control unit. Because the capacitance requirements output to VPIS and the client remote control unit are different, it is more flexible to set two independent shield pieces, and the capacitance parameters can be changed by adjusting the size of the shield pieces to match the different requirements.

The exemplary embodiments of the connection sleeve and the switch cabinet proposed by the present disclosure are described in detail above with reference to the preferred embodiments. However, those skilled in the art can understand that various variations and modifications can be made to the above specific embodiments without departing from the concept of this present disclosure, and various technical features and structures proposed by this present disclosure can be combined in various ways without exceeding the protection scope of the present disclosure.

## Claims

1. A connection sleeve, comprising:
a main body, at least partially formed in a column shape;
a conductive rod, extending through the main body in an axial direction;
a first electrical interface, located at one end of the conductive rod;
a second electrical interface, located at the other end of the conductive rod;
a first shield piece and a second shield piece, which are independent of each other, are formed in ring shapes and are respectively arranged around a part of the conductive rod in the main body and spaced apart from the conductive rod;
a first output interface, connected to the first shield piece and configured to output a first voltage signal; and
a second output interface, connected to the second shield piece and configured to output a second voltage signal independent of the first voltage signal.

2. The connection sleeve according to claim 1, wherein the first shield piece and the second shield piece are spaced apart from each other in a radial direction.

3. The connection sleeve according to claim 2, wherein the first shield piece and the second shield piece are partially overlapped with each other in an axial direction.

4. The connection sleeve according to any one of claims 1-3, further comprising an installation part formed in a polygonal shape and protruding around a part of the main body, wherein installation holes are formed in the installation part.

5. The connection sleeve according to claim 4, wherein the first shield piece and/or the second shield comprise reinforcing protrusions protruding in a radial direction, and the reinforcing protrusions are arranged at parts of the first shield piece and/or the second shield that are away from the first output interface/the second output interface in the axial direction.

6. The connection sleeve according to claim 4, wherein three first output interfaces which extend to connect the first shield piece to an outer surface of the main body and are spaced apart from each other by 90° are formed; and three second output interfaces which extend to connect the second shield piece to an outer surface of the installation part and are spaced apart from each other by 90° are formed.

7. The connection sleeve according to any one of claims 1-3, wherein the first electrical interface is configured to be connected to a cable and the second electrical interface is configured to be connected to a bus.

8. The connection sleeve according to claim 4, wherein the first electrical interface is a B-type interface or a C-type interface.

9. The connection sleeve according to any one of claims 1-3, wherein the main body is made of epoxy resin, the conductive rod, the first shield piece and the second shield piece are embedded in the main body.

10. A switch cabinet, comprising:
a cabinet wall;
a bus located in the switch cabinet; and
the connection sleeve according to any one of claims 1 to 9,
wherein the second electrical interface is configured to be connected to the bus, the first electrical interface is configured to be connected to a cable located outside the switch cabinet, the first output interface and the second output interface are configured to be able to be accessed from outside of the switch cabinet.
